# EUROPÄISCHE PATENTANMELDUNG

(11) **EP 4 260 711 A1**
(43) Veröffentlichungstag der Anmeldung: **18.10.2023**
(21) Anmeldenummer: 23167470.6
(22) Anmeldetag: 12.04.2023
(51) Int. Cl.: A23K 10/30, A23K 20/158, A23K 20/163, A23K 50/40, A23K 50/80

(54) **TIERFUTTER, INSBESONDERE FÜR IM WASSER LEBENDE TIERE**

(30) Priorität: 12.04.2022 DE 102022203666
(71) Anmelder: J. Rettenmaier & Söhne GmbH + Co. KG, 73494 Rosenberg (DE)
(72) Erfinder: Trampe, Torsten, 74586 Frankenhardt (DE); Dietz, Johann, 73479 Ellwangen (DE)
(74) Vertreter: Dr. Weitzel & Partner

(57) **Zusammenfassung**

Die Erfindung betrifft ein Tierfutter für Fische oder andere im Wasser lebende Tiere sowie für Haustiere. Die Erfindung ist dadurch gekennzeichnet, dass das Tierfutter Fasern des Kapokbaumes (*Ceiba pentandra*) enthält; die Fasern sind chemisch unbehandelt, sodass ihre Hohlform zur Bindung und Abgabe von zuzuführendem Öl erhalten bleibt.

Die Fasern weisen eine Länge von 20 µm bis 20 mm auf.

## Beschreibung

Die Erfindung betrifft ein Tierfutter für Nutz- und Haustiere, insbesondere für im Wasser lebende Tiere wie Fische, Garnelen, sowie für Hunde und Katzen u.a. Bei den Fischen handelt es sich um Zuchtfische, die in Aquarien oder in Freigewässern gehalten werden, aber auch Zierfische.

Die Haltung von Nutztieren, wie z.B. die Fischzucht, spielt in Zeiten drohender Nahrungsmittelknappheit eine zunehmend größere Rolle. Dabei sind die folgenden Aufgaben zu lösen:
- Das Tier soll innerhalb einer vorgegebenen Zeitspanne bis zur Verkaufsreife ein bestimmtes Gewicht erreichen.
- Die Qualität des Fleisches ist von entscheidender Bedeutung. Dabei sollen Krankheiten oder Fehlbildungen vermieden werden.
- Das Tier soll auch Stoffe zu sich nehmen, die einen unangenehmen Geruch oder Geschmack aufweisen, aber für das Wohl des Tieres günstig sind, zum Beispiel Heilmittel, antibakterielle Mittel, therapeutische Mittel. Dabei soll der Geschmack des Fleisches des Tieres durch die verabreichten Stoffe nicht negativ beeinflusst werden.

Bei Fischen kann die Nahrungsaufnahme dadurch beeinträchtigt oder ausgeschlossen sein, wenn sich verabreichte Stoffe nicht in der Schwebe, sondern am Boden befinden.

Vergleichbares gilt auch für viele andere Wassertiere, sowohl in Süßwasser als auch in Salzwasser oder Brackwasser lebend, wie Garnelen oder Muscheln.

Für Nutz- und Haustiere gilt, dass häufig Öle und Fette in konzentrierter Form als Energielieferanten verabreicht werden sollen.

Die Gesamtheit der oben genannten Aufgaben wurde bisher nur durch chemische Prozesse, nicht aber mit natürlichen Materialien zufriedenstellend gelöst. Sie wird gelöst durch die vorliegende Erfindung. Siehe Anspruch 1.

Gemäß der Erfindung ist die Basis des Tierfutters der Kapokbaum (*Ceiba pentandra*). Dabei kommen Bestandteile des Kapokbaumes in Betracht, wie dessen Frucht und insbesondere dessen Fasern, die die ölhaltigen Samen im Inneren der Frucht umhüllen. Diese Faser hat bemerkenswerte Eigenschaften:
Sie enthält Cellulose und Lignin.
Sie ist hohl und hat einen Lufteinschluss von 80% des Gesamtvolumens der Faser.
Sie ist leicht und weich und außen von einer Wachsschicht umgeben.
Sie ist sauerstoffabsorbierend.
Sie weist eine starke Ölbindung auf. Dabei ist die Faser selbst nicht ölhaltig, vermag aber große Mengen an Öl aufzunehmen. Teilweise geschieht dies in ihren Hohlräumen.

Für Nutz- und Haustiere gilt, dass Öle und Fette die wichtigsten Energielieferanten sind. Bei zu hoher Dosierung oder zu niedriger Aufnahmekapazität der übrigen Tierfutterkomponenten neigen sie dazu, sich während der Lagerung oder besonders bei der Fütterung in Wasser, aus dem Tierfutter zu separieren. Dadurch gehen sie für das Tier verloren. Die Kapokfaser ermöglicht es aufgrund ihrer hohen Ölbindekapazität, besonders hohe Mengen an Ölen und Fetten dem Tier zu verabreichen, womit ein gesundes Wachstum gefördert wird.

Darüber hinaus bietet der Einsatz der Kapokfaser zusätzliche Effekte. So haben ätherische Öle bei Nutztieren eine hohe positive Bedeutung. Die Schwierigkeit hierbei besteht aber darin, dass die Öle in jenen Bereichen des Tieres an jene Körperstellen transportiert werden müssen, wo sie benötigt werden. Die Kapokfaser kann mit einem Öl beladen und dann mit weiteren Fetten verkapselt werden. Auf diese Weise wird das Abgeben des ätherischen Öles deutlich verlangsamt und ist somit effizienter als mit klassischen ölbindenden Granulaten. Die Kapokfaser eignet sich somit zum Abgeben eines Öles, beispielsweise eines ätherischen Öles an den Tierkörper in wohldosierter Form, das heißt über längere Zeitspannen hinweg.

Ein weiterer Vorteil der Kapokfaser besteht darin, dass infolge des Auftriebes solcher Fasern die Sinkgeschwindigkeit eines Tierfutters, das Kapokfasern enthält, gesteuert werden kann.

Für das Darreichen von Tierfutter, insbesondere von Fischfutter, ist die Verbindung mit Kapokfasern somit höchst geeignet.

Es wurde festgestellt, dass die Kapokfasern für alle genannten Anwendungen eine Faserlänge von 20 µm bis 20 mm aufweisen sollten, bevorzugt 30 µm bis 2 mm, oder besonders bevorzugt zwischen 50 und 700 µm (Mikroskopanalyse).

Kürzere Fasern weisen eine zu geringe Funktionalität auf; längere Fasern sind unter gängigen Herstellbedingungen in Futtermittelrezepturen nicht mehr homogen einarbeitbar. Hieraus ergibt sich der o.g. Längenbereich.

### Eigenschaften und Vorteile der Kapokfaser

- Die Faser hat eine besonders starke Neigung, Öle und Fette langfristig zu binden, und damit auch andere Produkte festzuhalten, die dem Tier verabreicht werden sollen.
- Durch eine geeignete Faserlänge und die lipophile Beschaffenheit der Faseroberfläche lässt sich eine Emulsion stabil halten, unabhängig von hohen (sommerlichen) Temperaturen. Ein Absondern von Fett wird vermieden.
- Wird bei Futtermittelmischungen das Ausölen verhindert, so fördert dies das Vermischen von ölhaltigen Bestandteilen mit anderen Bestandteilen.
- Durch die Öl- und Fettbindekapazität der Kapokfaser lässt sich eine Pulver/Granulatmischung herstellen, geeignet zum Tablettieren, Kompaktieren, Pelletieren.
- Die Faser reguliert das Schwimmverhalten von Fischfutter und erhöht damit die Akzeptanz beim Fisch.
- Ölhaltiges Fischfuttermittel gibt bekanntlich Öl an das Wasser ab, sodass ein Teil des Nutzens des Öles verlorengeht und die Umwelt verunreinigt. Durch die starke Bindeneigung von Öl an Kapokfaser wird dies minimiert.
- Ölige Mischungen verhalten sich normalerweise wie Flüssigkeiten. Durch die Zugabe der langen Faser in Kombination mit der Ölbindung wird eine Veränderung der Fließeigenschaften erreicht, die sich zum Beispiel beim Pumpen positiv verändern, aber bei Stillstand wieder miteinander vernetzen und so die Viskosität höher erscheinen lassen als im fließenden Zustand.
- Ätherische Öle im Nutztier haben eine hohe Bedeutung. Schwierigkeit hierbei ist es, die Öle in den Bereichen des Tieres erst verfügbar zu machen, wo sie wirklich benötigt werden. Deshalb könnte die Lignin haltige Hohlfaser mit einem Öl befüllt und dann mit weiteren Fetten verkapselt werden. So wäre die Zeit bis zum Austritt des ätherischen Öles deutlich verlangsamt und somit effizienter als mit klassischen ölbindenden Granulaten. Bei Säuren hilft der hohe Anteil an Klason-Lignin, das aufgrund seiner hohen Säureresistenz die schützenden Eigenschaften der Faser unterstützt.
- Sensitives Öl lässt sich in der Faser einbinden, getrennt von Sauerstoff und oxidationsfördernden Maßnahmen, zum Beispiel Metalle, Eisen, Enzyme, Lipoxygenase.
- Unter dem Ausdruck "Tierfutter" ist Futter für Nutztiere sowie für Haustiere zu verstehen.
- Die hier beschriebenen Tierfutter eignen sich auch zur Verwendung als sogenannte Belohnungshappen, die im Allgemeinen in kleinen Mengen dem Tier verabreicht werden, zum Beispiel als Belohnung oder zum Anreiz für bestimmte Verhaltensweisen des Tieres.
- Die folgende Aufzählung des Begriffes "Tierfutter" ist nicht abschließend, zeigt aber zahlreiche wichtige Varianten:
   - Alleinfuttermittel
   - Mischfuttermittel
   - Ergänzungsfuttermittel
   - Milchaustausch-Futtermittel
   - Mineralfuttermittel
   - Trägerstoffmischungen
   - Fütterungsarzneimittel
   - Futtermittel für besondere Ernährungszwecke.

### Ausführungsbeispiele

### 1) Paste

Bei internen Versuchen mit öl-und fettbasierenden Pasten hat sich eine deutliche Verbesserung der Konsistenz gezeigt, die auf Grund der Anlagerungsfähigkeit der Faser, aber auch der Faserlänge von 0,1 mm - 4 mm zu erklären ist. Der Effekt war bei Konzentrationen ab 0,2% Kapokfaser sichtbar und wurde ab 0,5% signifikant. Das Produkt wurde insgesamt fester, zeigte aber klare Unterschiede in der Strukturbindung, sodass die Mischung aus Trocken- und Feststoffkomponenten keinerlei Separation aufzeigte. Bei beschleunigten Lagertests unter hohen Lagertemperaturen (48 Stunden bei 35°C) konnte der Effekt noch deutlicher kenntlich gemacht werden, so dass man hier von einer hochwertigen Vernetzungsstruktur ausgehen kann, die somit die Qualität des Produktes, aber auch der Homogenität der Nährstoffdichte beim Tier während der Futteraufnahme sicherstellen kann.

### 2) Fischfutter

Bei internen Tests mit fisch- und getreidebasiertem Fischfutter wurde eine Rezeptur mit 35% Fischöl ausgewählt. Eine Konzentration von 2% Kapokfaser (0,1-4 mm Faserlänge) wurde mit dem Fischöl vermengt und danach mit den Trockenstoffen verknetet. Danach wurden aus großen Teigmengen dünne Stränge (ca. 15-20 mm) geformt und in gleicher Länge quadratisch geschnitten. Diese Stücke wurden dann mit Hilfe eines Durchlaufgartunnels bei 97 °C für 180 Sekunden erhitzt und anschließend auf eine Endfeuchte von 8 % getrocknet. Schon während der Produktion war bei Einsatz der Kapokfaser ein deutlich geringerer Ölverlust zu erkennen, dessen Effekt sich vor allem auch während der Trocknung (120 Minuten bei 180°C) zeigte.

Bei anschließenden Tests in 1000 ml Messzylindern und 21 °C Wassertemperatur, hatten die Muster ohne Kapokfaser deutliche Ölverluste, die sich als Ölrand an der Oberfläche des Messzylinders sammelten. Bei den Mustern mit Kapokfasern waren nur sehr leichte Benetzungen der Oberfläche zu erkennen, was auch hier auf die Effektivität des Fasernetzwerks und der Fettanlagerungsfähigkeit schließen lässt.

### 3) Fischfutter mit reduziertem Anteil an Transfettsäuren

Eine weitere Rezeptur wurde mit dem Ziel erarbeitet, den Anteil an Transfettsäuren signifikant zu reduzieren. Transfettsäuren werden als Nebenprodukt bei der Fetthärtung generiert und haben den Ruf, sich in hohen Mengen schädlich auf die Gesundheit auszuwirken. Fischfutter, speziell für lachsartige Fische hat einen hohen Fettanteil, welches nahezu komplett in gehärteter Form zugegeben wird. Dadurch gelangen diese, bei der Fütterung der Fische, in konzentrierter Form in den Nahrungskreislauf und können sich dort negativ auswirken. Deshalb wurden zwei verschiedene Rezepturen gegenübergestellt, wohlwissend, dass die Standardrezeptur mit gehärteten Fetten produziert werden muss, um eine problemlose Verarbeitung zu ermöglichen.

### Rezeptur Standard

| Rohstoff | % |
|---|---|
| | |
| Fischmehl, gemischt | 25,2 |
| Sojamehl | 16,3 |
| Maismehl | 16,3 |
| Volleipulver | 7,2 |
| Pflanzenfett,20%H2O, gehärtet | 21,5 |
| Wasser | 12,9 |
| Kaliumsorbat | 0,6 |
| | |
| | 100 |

Die zweite Rezeptur wurde mit Öl hergestellt, welches aber auf Grund seiner Beschaffenheit zu Verarbeitungsproblemen führen würde, falls man nicht die mechanisch gekürzte Kapokfaser mit einsetzt. Dies wurde bereits bei vorherigen Labortests festgestellt und bestätigt.

### Rezeptur Kapokfaser

| Rohstoff | % |
|---|---|
| | |
| Fischmehl, gemischt | 24,6 |
| Sojamehl | 16,3 |
| Maismehl | 16,3 |
| Volleipulver | 7,2 |
| Sonnenblumenöl | 17,2 |
| Wasser | 17,2 |
| Kaliumsorbat | 0,6 |
| Kapokfaser, mechanisch gekürzt < 20mm | 0,6 |
| | |
| | 100,00 |

Bei der Verarbeitung der zu vergleichenden Rezepturen gab es keine merklichen Unterschiede, sodass man auf ein gehärtetes Fett verzichten und dadurch das Produkt deutlich gesünder produzieren kann. Bei nachfolgenden Lagertests, sowie späterer Beurteilung nach vier Wochen, konnten keine signifikanten Unterschiede im Fischfutter bemerkt werden. So wurde also die Theorie bestätigt, dass es möglich ist, ein Fischfutter zu produzieren, ohne auf eine Fetthärtung zurückgreifen zu müssen.

## Patentansprüche

1. Tierfutter für Fische oder andere im Wasser lebende Tiere sowie für Haustiere; **dadurch gekennzeichnet, dass**
1.1. das Tierfutter Fasern des Kapokbaumes (*Ceiba pentandra*) enthält;
1.2 die Fasern chemisch unbehandelt sind, sodass ihre Fähigkeit zur Bindung beziehungsweise Abgabe von zuzuführendem Öl erhalten bleibt;
1.3 die Fasern eine Länge von 20 µm bis 20 mm aufweisen.

2. Tierfutter nach Anspruch 1, **dadurch gekennzeichnet, dass** dieses Einzelfuttermittel oder Futtermittelzusatzstoffe enthält.

3. Tierfutter nach Anspruch 1 oder 2, **dadurch gekennzeichnet, dass** dieses Stoffe enthält, deren Aufnahme dem Tier ohne Verwendung von Kapokfasern wegen unangenehmen Geruchs oder Geschmacks widersteht, wie Heilmittel, antibakterielle Mittel, therapeutische Mittel.

4. Tierfutter nach einem der Ansprüche 1 bis 3, **dadurch gekennzeichnet, dass** dieses zwischen 0,1 und 10 % Kapokfasern, bevorzugt zwischen 0,2 und 5 %, umfasst.
